# FASCICULE DE BREVET EUROPEEN

(11) **EP 1 012 652 B1**
(45) Date de publication et mention de la délivrance du brevet: **18.12.2002**
(21) Numéro de dépôt: 97947132.3
(22) Date de dépôt: 25.11.1997
(51) Int. Cl.: G02B 6/44

(54) **DISPOSITIF DE RACCORDEMENT DE CABLES DE FIBRES OPTIQUES**
VERBINDUNG FÜR FASEROPTISCHE KABEL
CONNECTING DEVICE FOR OPTICAL FIBER CABLES

(30) Priorité: 25.11.1996 FR 9614375
(43) Date de publication de la demande: 28.06.2000
(73) Titulaire: RADIALL, 93116 Rosny-Sous-Bois (FR)
(72) Inventeur: DILLAT, Michel, Louis, Romain, F-92400 Courbevoie (FR)
(74) Mandataire: Leszczynski, André
(86) Numéro de dépôt international: FR9702122
(87) Numéro de publication internationale: WO98023987

(56) Documents cités:
- EP-A- 0 213 365
- EP-A- 0 479 226
- EP-A- 0 490 644
- EP-A- 0 549 963
- EP-A- 0 575 258
- WO-A-94/00786
- WO-A-97/01119
- DE-A- 3 006 131
- US-A- 4 478 487
- US-A- 5 204 927
- US-A- 5 515 472

## Description

La présente invention concerne un dispositif de raccordement de câbles de fibres optiques.

Les dispositifs de raccordement de câbles de fibres optiques sont utilisés notamment pour réaliser des lignes de longue distance enterrées, en réunissant bout à bout des tronçons de câbles de longueur déterminée.

Chaque dispositif de raccordement est logé dans un boîtier de protection étanche et est en général rempli d'un gaz sous pression qui empêche l'introduction de poussières à l'intérieur du boîtier.

Une des difficultés que l'on rencontre dans l'agencement de ces dispositifs de raccordement réside dans l'organisation des différentes fibres optiques de chaque câble, chaque fibre devant être raccordée individuellement à une fibre d'un autre câble.

On connaît déjà un dispositif de raccordement de câbles de fibres optiques dans lequel les fibres sont raccordées deux à deux à l'aide d'une épissure et chaque paire de fibres ainsi constituée est enroulée sur elle-même puis logée dans une cassette, ce qui empêche les paires de fibres de s'emmêler les unes avec les autres.

De façon plus précise, dans ce dispositif connu, les fibres optiques sont connectées deux à deux à l'aide d'épissures individuelles qui sont regroupées côte-à-côte dans une ou plusieurs cassettes.

Les longueurs de réserves de fibres, nécessaires à la réalisation des épissures, sont alors enroulées sur elles-mêmes puis bridées dans la ou les cassettes au voisinage immédiat des épissures afin d'une part d'éviter qu'elles s'emmèlent les unes avec les autres et d'autre part d'en contrôler le rayon de courbure.

Dans ce dispositif antérieur, chaque fibre doit avoir une longueur déterminée avant l'opération d'épiesurage afin que selon la position finale de l'épissure dans la cassette, les boucles des fibres puissent être disposées et bridées de façon ordonnée. Ceci constitue une première difficulté de mise en oeuvre du dispositif.

De plus, pour réparer une épissure ou intervertir deux épissures, il est nécessaire d'accéder à l'intérieur de la ou des cassettes concernées, de libérer les boucles des fibres et d'en modifier les longueurs en fonction de la nouvelle organisation des épissures après intervention. Il s'agit donc d'opérations particulièrement longues et délicates.

La présente invention concerne un dispositif de raccordement d'au moins deux câbles de fibres optiques du type décrit dans EP-A-0549963 et comportant:
- un support longitudinal comportant une portée supérieure sensiblement plane s'étendant longitudinalement et deux flancs latéraux s'étendant longitudinalement de part et d'autre de cette portée supérieure en direction du dessous de ladite portée supérieure,
- une pluralité d'éléments individuels de raccordement de fibres optiques deux à deux, chaque élément de raccordement étant susceptible d'être disposé transversalement sur la face supérieure de la portée supérieure du support longitudinal,
- un espace libre ménagé dans le support longitudinal et partiellement délimité par ce dernier, espace libre dans lequel des fibres optiques sont destinées à pénétrer et à se lover librement puis à rejoindre directement un élément individuel de raccordement fixé sur la face supérieure de la portée supérieure du support longitudinal.

Les caractéristiques du dispositif selon l'invention sont exposées dans la revendication 1.

Dans le dispositif de raccordement selon l'invention, les fibres optiques dénudées subissent un minimum de contraintes car elles ne sont maintenues qu'à leurs deux extrémités, à savoir à l'entrée du dispositif lorsqu'elles pénètrent dans l'espace libre et sur les flancs du support longitudinal juste avant d'aboutir aux éléments individuels de raccordement.

Sur le reste de leur longueur, les fibres optiques dénudées sont laissées libres de se positionner naturelllement dans l'espace libre.

Grâce à l'espace libre, toutes les fibres optiques issues d'un même câble peuvent présenter la même longueur, quel que soit l'élément individuel de raccordement auquel chaque fibre aboutit.

Dans un mode de réalisation préféré de l'invention, le support longitudinal est monté sur un pied central autour duquel les fibres optiques se lovent. Ce pied permet le relèvement et la rotation du support longitudinal par rapport au boîtier.

Ainsi, on peut opérer sur le dispositif de raccordement en surélevant légèrement le support longitudinal et en le faisant tourner à 90° par rapport au boîtier, les boucles formées par les fibres optiques dans l'espace prévu à cet effet constituant une réserve de longueur de fibres qui autorise cette rotation.

On comprend que, grâce au dispositif de raccordement selon l'invention, on peut facilement modifier une connexion en déplaçant l'extrémité d'une fibre optique d'un élément de raccordement individuel à un autre, ou permuter les extrémités de deux fibres optiques sans aucune difficulté.

De même, si l'extrémité d'une fibre optique a été endommagée, on peut raccourcir cette fibre pour préparer à nouveau son extrémité en tirant légèrement sur colle-ci, ce qui a pour seule conséquence de resserrer la boucle formée par la fibre optique en-dessous du support longitudinal.

En outre, par sa simplicité de stockage des longueurs de fibres optiques enfermées dans l'espace libre, le dispositif selon l'invention permet de réduire au minimum les manipulations nécessaires à la mise en place des fibres.

A cet égard, le dispositif selon l'invention est beaucoup plus pratique à mettre en oeuvre que les dispositifs de raccordement conventionnels dans lesquels, comme cela est généralement recommandé, les longueurs de réserve des fibres optiques sont lovées dans des cassettes et bridées à plusieurs endroits pour suivre un trajet imposé.

Dans un mode de réalisation particulier de l'invention, le support longitudinal présente une section transversale sensiblement ovoïdale.

Dans un autre mode de réalisation, ledit support longitudinal est muni de guides sur ses flancs, de part et d'autre de sa face supérieure portant les éléments de raccordement, chaque guide conduisant radialement chaque fibre du bord inférieur du flanc à l'extrémité d'un élément individuel de raccordement.

Dans le but de mieux faire comprendre l'invention, on va en décrire maintenant un mode de réalisation donné à titre d'exemple non limitatif en référence au dessin annexé dans lequel :
- la figure 1 est une vue en perspective d'un boîtier muni d'un dispositif de raccordement selon un mode de réalisation de l'invention,
- la figure 2 est une vue éclatée du dispositif de la figure 1,
- la figure 3 est une autre vue éclatée du même dispositif,
- la figure 4 représente le support longitudinal en perspective,
- la figure 5 est une vue en coupe selon V-V de la figure 7, le bottier étant fermé,
- la figure 6 est une section selon VI-VI de la figure 7, le boîtier étant ouvert et le support longitudinal relevé, et
- la figure 7 est une vue schématique de dessus du dispositif après introduction et agencement des brins de deux câbles.

Le dispositif 1 représenté sur le dessin est logé dans un boîtier cylindrique 2, d'axe longitudinal parallèle à celui du dispositif, se composant d'une embase 3 et d'un couvercle 4 assemblables selon deux génératrices opposées du boîtier.

L'embase 3 du boîtier est elle-même constituée par un socle inférieur 5 et par deux embouts d'extrémité en forme de disque 6.

Chaque embout d'extrémité 6 comporte quatre perçages 6a, 6b, 6c, 6d qui permettent l'introduction de quatre câbles à l'intérieur du boîtier.

Le boîtier délimite intérieurement un volume 7 dans lequel est logé Le dispositif 1 selon l'invention.

Ce dispositif 1 comprend un support longitudinal 8, de section transversale ovale, comprenant deux flancs 8b et une portée supérieure 8a.

La portée supérieure 8a est sensiblement plane et se présente sous la forme d'une surface rectangulaire.

Les flancs latéraux 8b sont convexes, leur section étant circulaire, et s'étendent depuis la portée supérieure 8a à laquelle ils se raccordent sans arête, jusqu'en dessous de ladite portée supérieure 8a. Le rayon de courbure des flancs latéraux est supérieur ou égal au rayon de courbure minimal des fibres des câbles à raccorder.

Le support est donc ouvert inférieurement et délimite, notamment entre la portée supérieure 8a et les flancs latéraux 8b, un espace libre 9 pour les fibres optiques.

Cet espace libre 9 est délimité inférieurement par l'embase 3 du boîtier qui présente un diamètre suffisant pour recevoir les bords inférieurs des flancs latéraux 8b, de sorte que ledit espace libre 9 est refermé lorsque le support 8 est mis en place dans l'embase, seules deux fentes longitudinales 17 formées entre les flancs latéraux 8b et les parois latérales de l'embase constituant des passages entre ledit espace libre 9 et le dessus du support 8.

Comme on le verra dans la suite de la description, ces fentes 17 permettent aux fibres optiques de passer directement de l'espace libre 9 à des éléments de raccordement.

Une barrette 10 d'éléments individuels de raccordement 11 parallèles est fixée sur la face supérieure de la portée supérieure 8a du support longitudinal.

Chaque élément individuel de raccordement 11 se présente transversalement au support longitudinal avec une extrémité dirigée vers chacun de ses flancs 8b.

En regard de chaque extrémité d'un élément individuel de raccordement 11, les flancs 8b du support longitudinal comprennent des guides 12 pour les fibres optiques sous la forme de rainures s'étendant radialement, c'est-à-dire dans des plans perpendiculaires à l'axe longitudinal du support.

Ces guides 12 conduisent radialement chaque fibre depuis le bord inférieur d'un flanc jusqu'à l'extrémité d'un élément individuel de raccordement 11 et assurent ainsi le maintien des fibres contre l'un des flancs du support.

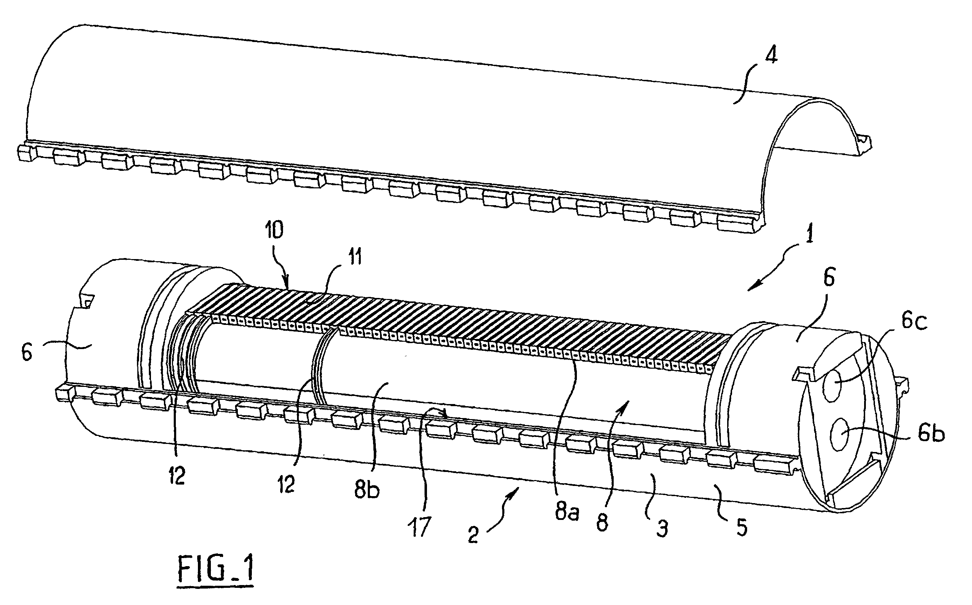

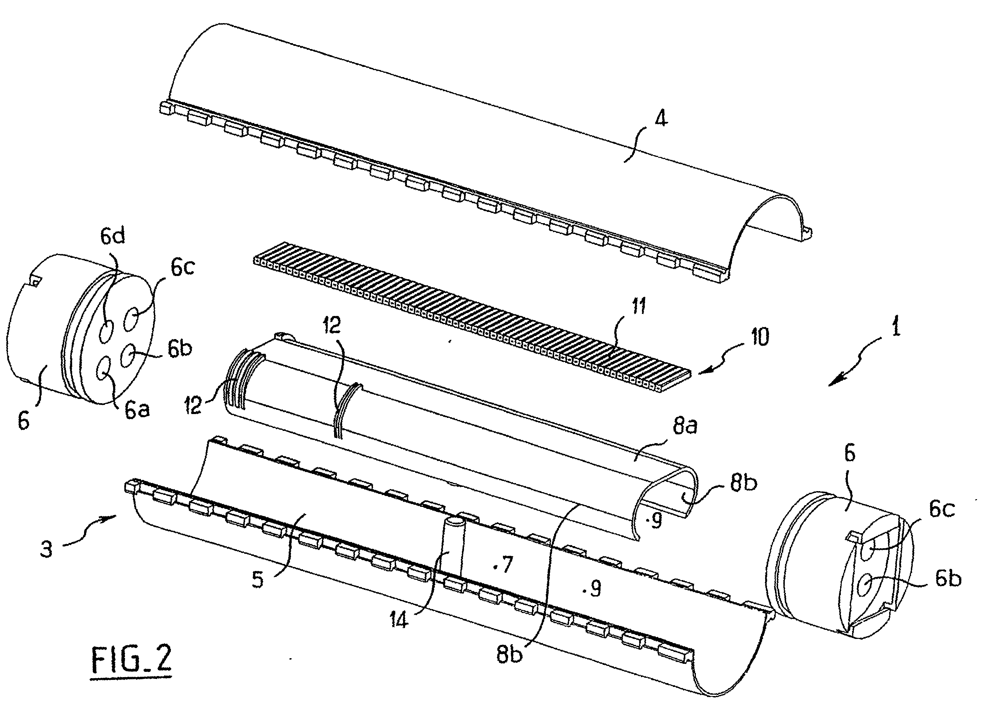

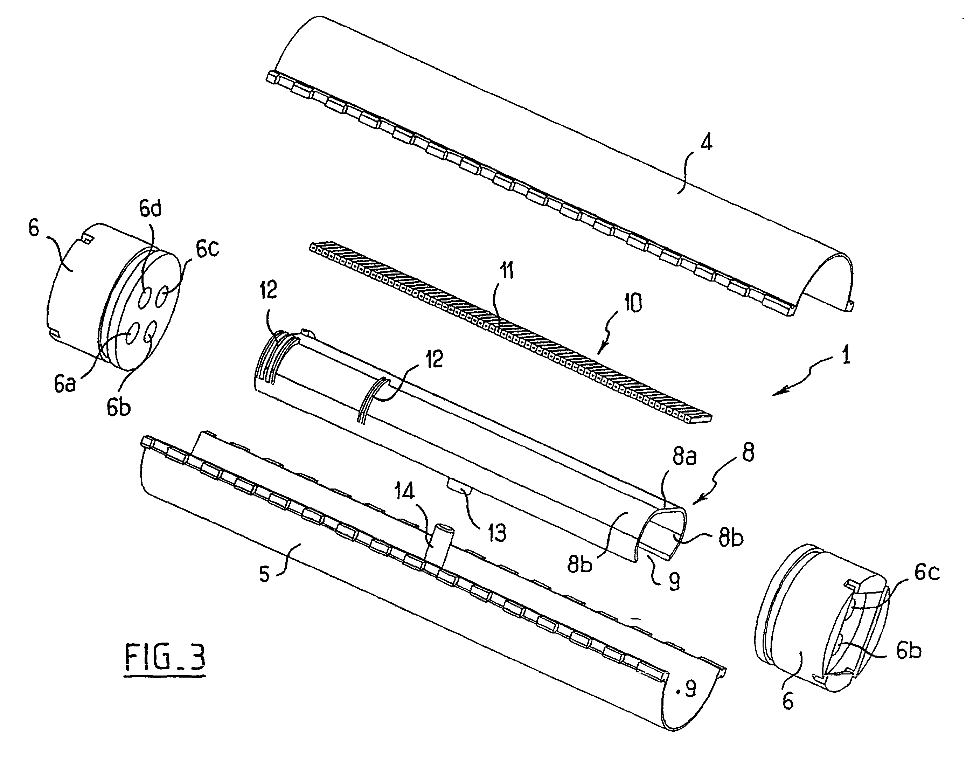

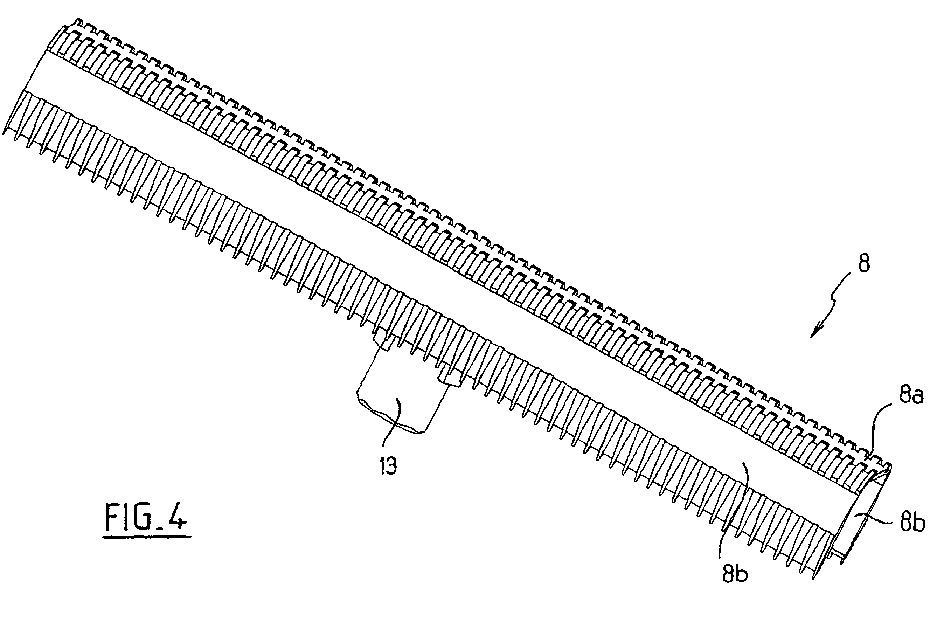

Pour des raisons de clarté, on n'a pas représenté toutes les rainures sur les figures 1, 2 et 3 mais elles apparaissent sur la figure 4.

Le support 8 comporte un plot central 13 à l'opposé de sa face supérieure, lequel plot coïncide avec un pied 14 prévu sur le socle 5 du boîtier.

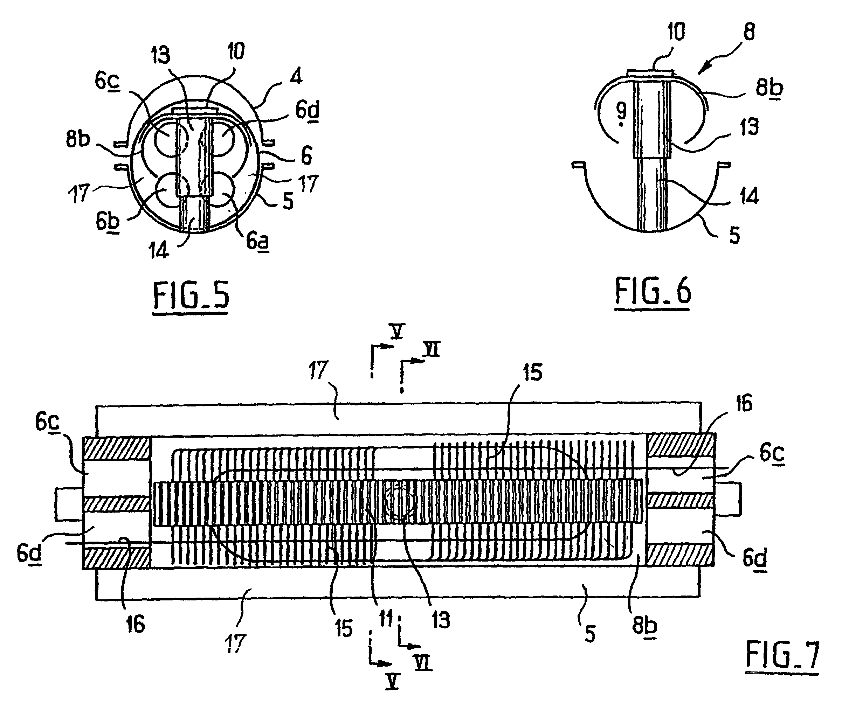

Le plot 13 et le pied 14 permettent le positionnement du support longitudinal 8 dans le boîtier ainsi que la rotation dudit support longitudinal par rapport au boîtier lorsque ledit support est légèrement surélevé, comme on le voit sur la section de la figure 6.

Sur la vue en coupe de la figure 5, on voit que lorsque le support 8 est logé dans le boîtier, les orifices 6a, 6b, 6c, 6d d'introduction de câbles débouchent dans l'espace libre 9 prévu pour les fibres optiques sous le support longitudinal.

Sur la figure 7, on a représenté schématiquement l'agencement général des fibres optiques 15 raccordées deux à deux par les éléments individuels de raccordement 11.

Pour des raisons de clarté, on n'a représenté qu'une seule fibre optique 15 au travers des orifices d'introduction 6c et 6d.

On voit que les fibres optiques 15-aboutissent directement aux extrémités de chaque élément individuel de raccordement 11 après s'être lovées sans contrainte dans l'espace libre 9 prévu à cet effet, et qu'elles passent directement de l'espace libre aux éléments de raccordement par les fentes latérales 17 en étant maintenues par les rainures contre les flancs qui garantissent leur courbure selon un rayon de courbure supérieur ou égal à leur rayon de courbure minimal.

On comprend qu'un tel agencement des fibres optiques dans le boîtier facilite la maintenance des connexions.

Les éléments individuels de raccordement peuvent être des dispositifs tels que celui décrit dans la demande de brevet français N° 95 07987 de la demanderesse.

## Revendications

1. Dispositif de raccordement d'au moins deux câbles de fibres optiques, comportant :
- un support longitudinal (8) comportant une portée supérieure (8a) sensiblement plane s'étendant longitudinalement et deux flancs latéraux convexes (8b) s'étendant longitudinalement de part et d'autre de cette portée supérieure en direction du dessous de ladite portée supérieure, le rayon de courbure de la section transversale de chaque flanc étant au moins égal au rayon de courbure minimal des fibres optiques des câbles à raccorder,
- une pluralité d'éléments individuels de raccordement (11) de fibres optiques (15) deux à deux, chaque élément de raccordement (11) étant disposé transversalement sur la face supérieure de la portée supérieure (8a) du support longitudinal,
- un espace libre,(9) ouvert à ses deux extrémités ménagé dans le support longitudinal et partiellement délimité par la portée supérieure et les deux flancs latéraux de ce dernier, et
- un boitier (2) cylindrique recevant ledit support longitudinal, ledit boîtier cylindrique (2) comportant à ses deux extrémités des entrées (6a, 6b, 6c, 6d) pour les câbles débouchant dans ledit espace libre (9) ménage dans ledit support longitudinal (8), ledit boîtier cylindrique se composant d'un couvercle (4) et d'une embase (3) assemblés selon deux génératrices opposées du boitier, l'embase (3) présentant un diamètre suffisant pour recevoir les bords inférieurs des flancs latéraux (8b) du support mis en place dans l'embase avec son axe longitudinal parallèle à celui du boîtier, de sorte que l'espace libre (9) est refermé par l'embase lorsque le support (8) est mis en place dans cette dernière et que seules deux fentes longitudinales (17) sont formées entre les flancs latéraux (8b) et les parois latérales de l'embase et constituent des passages pour les fibres entre ledit espace libre et le dessus du support, les fibres optiques (15) issues des câbles étant destinées à pénétrer dans ledit espace libre (9) dans lequel elles sont destinées à se lover librement puis à rejoindre directement, via l'un desdits passages longitudinaux (17) entre l'espace libre et le dessus du support un élément individuel de raccordement (11) fixé sur la face supérieure de la portée supérieure (8a) du support longitudinal (8) en étant maintenues contre la face externe du flanc correspondant dudit support longitudinal.

2. Dispositif selon la revendication 1, **caractérisé par le fait que** le support longitudinal (8) est monté sur un pied central (13) autour duquel les fibres optiques (15) sont destinées à lover et qui permet le relèvement et la rotation du support longitudinal (8) par rapport au boîtier.

3. Dispositif selon l'une quelconque des revendications 1 et 2, **caractérisé par le fait que** le support longitudinal (8) présente une section transversale sensiblement ovoïdale, la portée supérieure (8a) se présentant sous la forme d'une surface rectangulaire et les flancs latéraux (8b) ayant une section circulaire et s'étendant depuis la portée supérieure (8a), à laquelle ils se raccordent sans arête, jusqu'en dessous de ladite portée supérieure.

4. Dispositif selon l'une quelconque des revendications 1 à 3, **caractérisé par le fait que** le support longitudinal (8) est muni de guides transversaux (12) sur la face externe de ses flancs latéraux, de part et d'autre de sa portée supérieure, portant les éléments de raccordement, chaque guide transversal conduisant circonférentiellement chaque fibre du bord inférieur du flanc à l'extrémité d'un élément individuel de raccordement (11).

## Patentansprüche

1. Vorrichtung zur Verbindung von mindestens zwei Optikfaser-Kabeln, umfassend:
- einen Längshalter, der eine im wesentlichen ebene obere Auflagefläche (8a), die sich in Längsrichtung erstreckt, und zwei konvexe Seitenflanken (8b) aufweist, die sich in Längsrichtung zu beiden Seiten dieser oberen Auflagefläche in Richtung nach unten bezüglich dieser oberen Auflagefläche erstrecken, wobei der Krümmungsradius des Querschnitts jeder Flanke mindestens gleich dem Mindestkrümmungsradius der Optikfasern der zu verbindenen Kabel ist,
- eine Vielzahl von Einzelelementen (11) zur paarweisen Verbindung von Optikfasern (15), wobei jedes Verbindungselement (11) quer auf der Oberseite der oberen Auflagefläche (8a) des Längshalters angeordnet ist,
- einen an seinen beiden Enden offenen freien Raum (9), der im Längshalter vorgesehen ist und teilweise durch die obere Auflagefläche und die beiden Seitenflanken des Längshalters abgrenzt wird, und
- ein zylindrisches Gehäuse (2), das den Längshalter aufnimmt, wobei dieses zylindrische Gehäuse (2) an seinen beiden Enden Eintritte (6a,6b,6c,6d) für die Kabel besitzt, die in diesen im Längshalter (8) vorgesehenen freien Raum (9) ausmünden, wobei dieses zylindrische Gehäuse aus einem Deckel (4) und einem Sockel (3) besteht, die gemäß zwei entgegengesetzten Erzeugenden des Gehäuses zusammengefügt sind, wobei der Sockel (3) einen ausreichenden Durchmesser aufweist, um die unteren Ränder der Seitenflanken (8b) des Halters aufzunehmen, der in den Sockel mit seiner Längsachse parallel zu der des Gehäuses eingesetzt ist, so daß der freie Raum (9) durch den Sockel geschlossen ist, wenn der Halter (8) in diesen eingesetzt ist, und daß nur zwei Längsschlitze (17) zwischen den Seitenwangen (8b) und den Seitenwänden des Sockels gebildet sind und Durchgänge für die Fasern zwischen diesem freien Raum und dem Oberteil des Halters bilden, wobei die von den Kabeln kommenden Optikfasern (15) dazu bestimmt sind, in diesen freien Raum (9) einzutreten, in dem sie sich frei herumlegen sollen und dann über einen der Längsdurchgänge (17) zwischen dem freien Raum und dem Oberteil des Halters direkt ein Einzelverbindungselement (11) erreichen sollen, das auf der Oberseite der oberen Auflagefläche (8a) des Längshalters befestigt ist, indem sie an der Außenseite (8a) der entsprechenden Flanke gehalten werden.

2. Vorrichtung nach Anspruch 1, **dadurch gekennzeichnet, daß** der Längshalters (8) auf einem zentralen Fuß (13) montiert ist, um welchen die Optikfasern (15) sich herumlegen sollen und der das Anheben und die Drehung des Längshalters (8) bezüglich des Gehäuses gestattet.

3. Vorrichtung nach einem der Ansprüche 1 und 2, **dadurch gekennzeichnet, daß** das Längshalter (8) einen im wesentlichen eiförmigen Querschnitt aufweist, wobei die obere Auflagefläche (8a) in Form einer rechteckigen Fläche vorliegt und die Seitenflanken (8b) einen kreisförmigen Querschnitt besitzen und sich von der oberen Auflagefläche (8a), an die sie ohne Kante anschließen, bis unterhalb dieser oberen Auflagefläche erstrecken.

4. Vorrichtung nach einem der Ansprüche 1 bis 3, **dadurch gekennzeichnet, daß** der Längshalter (8) auf der Außenseite seiner Seitenflanken zu beiden Seiten seiner die Verbindungselemente tragenden oberen Auflagefläche mit Querführungen (12) versehen ist, wobei jede Querführung jede Faser umfangsmäßig vom unteren Rand der Flanke zum Ende eines Einzelverbindungselements (11) führt.

## Claims

1. Device for connecting at least two fibre-optic cables, comprising:
- a longitudinal support (8) comprising a virtually flat upper bearing surface (8a) running longitudinally and two convex side flanks (8b) running longitudinally on each side of this upper bearing surface towards the underside of the said upper bearing surface, the radius of curvature of the cross section of each flank being at least equal to the minimum radius of curvature of the optical fibres of the cables that are to be connected,
- a plurality of individual elements (11) for connecting pairs of optical fibres (15), each connecting element (11) being arranged transversely on the upper face of the upper bearing surface (8a) of the longitudinal support,
- an empty space (9), open at both ends and formed in the longitudinal support and partially delimited by the upper bearing surface and the two side flanks thereof, and
- a cylindrical casing (2) accommodating the said longitudinal support, the said cylindrical casing (2) comprising, at both ends, inlets (6a, 6b, 6c, 6d) for the cables opening into the said empty space (9) formed in the said longitudinal support (8), the said cylindrical casing being made up of a lid (4) and of a base (3) which are assembled along two opposite generatrices of the casing, the base (3) having a diameter large enough to accommodate the lower edges of the side flanks (8b) of the support positioned in the base with its longitudinal axis parallel to that of the casing, so that the empty space (9) is closed by the base when the support (8) is positioned therein and that only two longitudinal slots (17) are formed between the side flanks (8b) and the side walls of the base and constitute passages for the fibres between the said empty space and the top of the support, the optical fibres (15) originating from the cables being intended to enter the said empty space (9) in which they are intended to coil up freely and then go directly, via one of the said longitudinal passages (17) between the empty space and the top of the support, to meet an individual connecting element (11) fixed on the upper face of the upper bearing surface (8a) of the longitudinal support (8) while at the same time being held against the outer face of the corresponding flank of the said longitudinal support.

2. Device according to Claim 1, **characterized in that** the longitudinal support (8) is mounted on a central leg (13) around which the optical fibres (15) are intended to coil up and which allows the longitudinal support (8) to be lifted and turned with respect to the casing.

3. Device according to either one of Claims 1 and 2, **characterized in that** the longitudinal support (8) has a roughly ovoid cross section, the upper bearing surface (8a) being in the form of a rectangular surface and the side flanks (8b) having a circular cross section and extending from the upper bearing surface (8a), which they meet with no sharp edges, round to underneath the said upper bearing surface.

4. Device according to any one of Claims 1 to 3, **characterized in that** the longitudinal support (8) is equipped with transverse guides (12) on the outer face of its side flanks, on each side of its upper bearing surface, bearing the connecting elements, each transverse guide circumferentially leading each fibre from the lower edge of the flank to the end of an individual connecting element (11).
